# FASCICULE DE BREVET EUROPEEN

(11) **EP 1 916 464 B1**
(45) Date de publication et mention de la délivrance du brevet: **01.12.2010**
(21) Numéro de dépôt: 07356135.9
(22) Date de dépôt: 12.10.2007
(51) Int. Cl.: F16L 37/42, F16L 37/084

(54) **Elément femelle de raccord et raccord incorporant un tel élément**
Verbindungssteckerelement und Verbindungsstück, das ein solches Element umfasst
Female connection element and connection including such an element

(30) Priorité: 13.10.2006 FR 0608999
(43) Date de publication de la demande: 30.04.2008
(73) Titulaire: STAUBLI FAVERGES, 74210 FAVERGES (FR)
(72) Inventeur: Tiberghien, Alain-Christophe, 74320 Sevrier (FR)
(74) Mandataire: Schouller, Jean-Philippe

(56) Documents cités:
- FR-A- 2 166 770
- US-A- 4 612 953
- US-A- 4 792 115
- US-A- 5 074 524

## Description

La présente invention a trait à un élément femelle de raccord destiné à la jonction amovible de canalisations parcourues par un fluide sous pression et à un raccord comprenant un tel élément femelle et un élément mâle d'extrémité cylindrique lisse.

Il est connu de raccorder de manière amovible un élément mâle d'extrémité cylindrique lisse, tel qu'un tube, à une canalisation parcourue par un fluide sous pression à l'aide d'un élément femelle de raccord pourvu de moyens d'étanchéité, voir par exemple FR A 2 166 770. En particulier, un tel élément femelle comprend classiquement un joint d'étanchéité torique, disposé dans une gorge interne de l'élément femelle et choisi avec un diamètre intérieur au repos légèrement inférieur au diamètre extérieur du tube, afin de garantir l'étanchéité du raccordement. Lorsque le tube est introduit dans le corps de l'élément femelle, le joint est sollicité par l'extrémité du tube, jusqu'à ce qu'une expansion radiale suffisante du joint soit obtenue pour permettre le passage du tube. L'interaction entre l'extrémité du tube et le joint provoque une dégradation rapide du joint, qui est de plus favorisée par la présence d'irrégularités en saillie à la surface du tube, résultant par exemple de son tronçonnage. L'étanchéité et la durée de vie du joint sont dès lors sensiblement réduites, ce qui provoque un risque de fuite lors des raccordements et impose des remplacements fréquents du joint.

C'est à ces inconvénients qu'entend plus particulièrement remédier l'invention en proposant un élément femelle de raccord permettant un raccordement étanche d'un tube et d'une canalisation parcourue par un fluide sous pression, sans dégradation des moyens d'étanchéité.

A cet effet, l'invention a pour objet un élément femelle de raccord destiné à la jonction amovible de canalisations parcourues par un fluide sous pression, cet élément femelle étant apte à recevoir un élément mâle en emmanchement selon un axe longitudinal, l'élément femelle comprenant un joint d'étanchéité, logé à l'intérieur d'un corps de l'élément femelle et apte à coopérer de manière étanche avec une surface périphérique d'un élément mâle emmanché dans l'élément femelle, caractérisé en ce que l'élément femelle comprend en outre un organe d'interface, logé à l'intérieur du corps de l'élément femelle et mobile en translation parallèlement à l'axe d'emmanchement, cet organe d'interface étant apte à être déplacé axialement par un élément mâle en cours d'emmanchement dans l'élément femelle, depuis une première position, dans laquelle l'organe d'interface est intercalé radialement entre le joint d'étanchéité et la surface périphérique de l'élément mâle, vers une deuxième position, dans laquelle l'organe d'interface est décalé axialement par rapport au joint d'étanchéité et le joint d'étanchéité repose de manière étanche sur la surface périphérique de l'élément mâle.

Selon d'autres caractéristiques facultatives de l'invention, prises isolément ou selon toutes les combinaisons techniquement possibles :
- l'organe d'interface est apte à être déplacé axialement depuis la deuxième position vers la première position lors du désaccouplement de l'élément femelle et d'un élément mâle emmanché dans l'élément femelle ;
- l'élément femelle comprend des moyens de rappel élastique aptes à repousser axialement l'organe d'interface vers la première position ;
- l'organe d'interface a une épaisseur minimale au niveau de son extrémité la plus proche du joint d'étanchéité dans la deuxième position de l'organe d'interface ;
- l'organe d'interface comporte une surface périphérique inclinée par rapport à l'axe d'emmanchement, cette surface étant apte à recevoir en appui le joint d'étanchéité lorsque l'organe d'interface est intercalé radialement entre le joint d'étanchéité et la surface périphérique d'un l'élément mâle emmanché dans l'élément femelle ;
- l'élément femelle comprend des moyens de charge du joint d'étanchéité en direction de la surface périphérique d'un élément mâle emmanché dans l'élément femelle ;
- les moyens de charge comprennent un organe auxiliaire apte à exercer sur le joint d'étanchéité un effort axial dirigé à l'encontre du déplacement de l'organe d'interface de la première position vers la deuxième position ;
- l'organe auxiliaire comporte une surface périphérique inclinée par rapport à l'axe d'emmanchement, apte à exercer sur le joint d'étanchéité un effort radial dirigé vers la surface périphérique d'un élément mâle en cours d'emmanchement dans l'élément femelle ;
- l'élément femelle comprend un clapet de fermeture de l'élément femelle, logé à l'intérieur du corps et mobile en translation parallèlement à l'axe d'emmanchement, ce clapet étant apte à être déplacé axialement à l'encontre de moyens de rappel élastique par un élément mâle en cours d'emmanchement dans l'élément femelle ;
- le clapet comporte une gorge de réception du joint d'étanchéité ;
- l'organe d'interface est apte à coulisser, par rapport au clapet, à l'encontre de premiers moyens de rappel élastique, alors que le clapet est apte à coulisser par rapport au corps à l'encontre de deuxièmes moyens de rappel élastique, les premiers moyens exerçant un effort de rappel inférieur à l'effort de rappel des deuxièmes moyens ;
- l'organe d'interface est solidaire en déplacement du clapet ;
- l'élément femelle comprend un second joint d'étanchéité disposé dans un épaulement de l'organe d'interface destiné à recevoir en butée un élément mâle en cours d'emmanchement dans l'élément femelle ;
- le diamètre intérieur du joint d'étanchéité lorsque l'organe d'interface est dans la première position est supérieur au diamètre intérieur du joint d'étanchéité lorsque l'organe d'interface est dans la deuxième position, le joint d'étanchéité coopérant de manière étanche avec la surface périphérique externe d'un élément mâle en cours d'emmanchement dans l'élément femelle lorsque l'organe d'interface est dans la deuxième position ;
- lors du déplacement de l'organe d'interface d'une position correspondant à une configuration désaccouplée de l'élément femelle vers la deuxième position, le joint d'étanchéité atteint au moins une configuration dans laquelle le diamètre intérieur du joint d'étanchéité est supérieur au diamètre intérieur du joint d'étanchéité lorsque l'élément femelle est en configuration désaccouplée ;
- le joint d'étanchéité s'étire contre la surface périphérique interne d'un élément mâle en cours d'emmanchement dans l'élément femelle lors du déplacement de l'organe d'interface de la première position vers la deuxième position ;
- l'élément femelle comprend un mécanisme de verrouillage d'un élément mâle en cours d'emmanchement et en configuration emmanchée dans l'élément femelle, ce mécanisme comportant des organes de verrouillage, propres à coopérer avec une surface périphérique de l'élément mâle, et une bague de verrouillage, mobile en translation par rapport au corps et parallèlement à l'axe d'emmanchement, cette bague étant apte, sous l'action de moyens de rappel élastique, à repousser radialement les organes de verrouillage en direction de l'axe d'emmanchement le long d'une surface périphérique du corps inclinée par rapport à l'axe d'emmanchement.

L'invention a également trait à un raccord pour la jonction amovible de canalisations parcourues par un fluide sous pression, comprenant un élément mâle d'extrémité cylindrique lisse et un élément femelle propres à s'emmancher l'un dans l'autre, l'élément femelle étant tel que décrit ci-dessus.

Les caractéristiques et avantages de l'invention apparaîtront dans la description qui va suivre de quatre modes de réalisation d'un élément femelle et d'un raccord selon l'invention, donnée uniquement à titre d'exemple et faite en se référant aux dessins annexés dans lesquels :
- la figure 1 est une coupe longitudinale d'un raccord conforme à un premier mode de réalisation de l'invention, en configuration désaccouplée de ses éléments mâle et femelle ;
- la figure 2 est une coupe analogue à la figure 1, lors d'une première étape de raccordement des éléments mâle et femelle ;
- la figure 3 est une coupe analogue à la figure 1, lors d'une deuxième étape de raccordement des éléments mâle et femelle ;
- la figure 4 est une coupe analogue à la figure 1, en configuration raccordée des éléments mâle et femelle ;
- la figure 5 est une coupe analogue à la figure 1, lors du désaccouplement des éléments mâle et femelle ;
- la figure 6 est une coupe longitudinale partielle d'éléments constitutifs d'un raccord conforme à un deuxième mode de réalisation de l'invention ;
- la figure 7 est une coupe longitudinale partielle d'éléments constitutifs d'un raccord conforme à un troisième mode de réalisation de l'invention ; et
- la figure 8 est une coupe analogue à la figure 1 pour un raccord conforme à un quatrième mode de réalisation de l'invention.

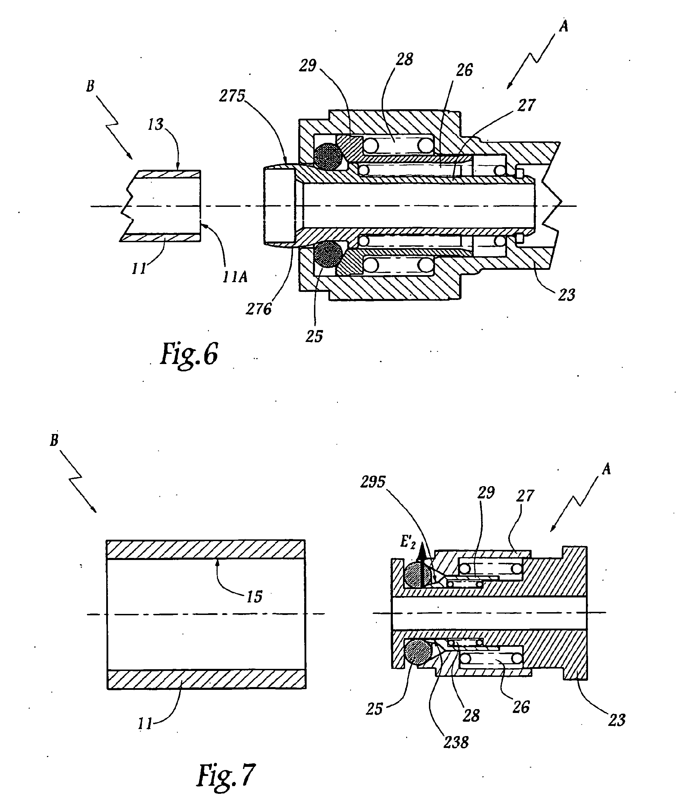

Dans les dessins ci-dessus, les éléments de raccord ont été simplifiés dans un souci de clarté. De plus, sur les figures 6 et 7, les pièces identiques au premier mode de réalisation n'ont pas été représentées.

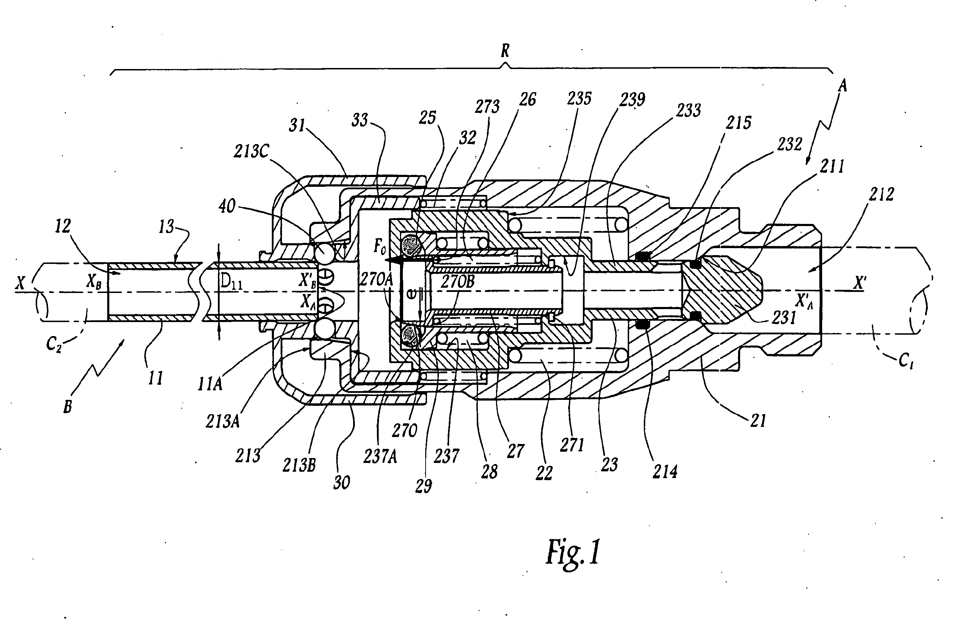

Le raccord R représenté à la figure 1 comprend un élément femelle A et un élément mâle B prévus pour s'emmancher l'un dans l'autre dans la direction d'un axe d'emmanchement X-X', qui est un axe longitudinal commun aux éléments A et B. Au sens de l'invention, « l'avant » de l'élément A ou B désigne la partie de cet élément destinée à être dirigée vers l'autre élément pour obtenir l'emmanchement, « l'arrière » de l'élément étant la partie opposée. Par extension, « l'avant » d'une pièce constitutive de l'élément A ou B désigne la partie de cette pièce dirigée vers l'avant de l'élément.

La partie arrière de l'élément femelle A est raccordée fluidiquement à une première canalisation C₁, alors que la partie arrière de l'élément mâle B est raccordée à une seconde canalisation C₂. A titre d'exemple, l'élément mâle B est relié à un tuyau de remplissage en fluide réfrigérant d'un réfrigérateur non représenté, alors que l'élément femelle A est relié par la canalisation C₁ à un réservoir non représenté de fluide réfrigérant sous pression.

L'élément mâle B comprend un corps 11 tubulaire à section circulaire, sur lequel est raccordée la canalisation C₂ et qui définit un canal interne 12 de circulation de fluide. L'élément mâle B est à symétrie de révolution autour d'un axe central X_{B}-X'_{B}, qui est confondu avec l'axe X-X' lors l'emmanchement de l'élément mâle B dans l'élément femelle A. L'élément mâle B est pourvu d'une extrémité 11A cylindrique lisse pour son emmanchement dans l'élément femelle A.

L'élément femelle A comprend un corps 21 tubulaire, sur lequel est raccordée la canalisation C₁. Le corps 21 définit un canal central 212 dans lequel est disposé un clapet 23 mobile en translation parallèlement à un axe X_{A}-X'_{A} qui est un axe central de l'élément A, confondu avec l'axe X-X' lors de l'emmanchement des éléments A et B.

Le clapet 23 comprend une partie pleine 231 et une partie creuse 233, la partie pleine 231 étant destinée à venir en appui étanche contre un siège 211 formé par le corps 21. Plus précisément, la partie pleine 231 est équipée d'un joint torique 232 prévu pour venir en appui contre le siège 211, de manière à obturer le canal 212. En outre, le corps 21 est pourvu d'une gorge interne 215 de réception d'un joint torique 214 contre lequel porte la partie creuse 233. Un ressort 22 exerce sur un épaulement externe 235 du clapet 23 un effort élastique tendant à plaquer la partie 231 équipée du joint 232 contre le siège 211, c'est-à-dire à fermer le canal 212 de l'élément femelle A.

Une embouchure 213 de la partie avant du corps 21, opposée à la canalisation C₁, est équipée d'une bague de verrouillage 30 comprenant un fourreau extérieur 31 de manoeuvre, disposé autour du corps 21, et un manchon intérieur 33. Le manchon intérieur 33 est chargé élastiquement par un ressort 32 de manière à repousser des billes de verrouillage 40 vers l'extrémité avant 213A de l'embouchure 213. Les billes 40 sont aptes à coopérer avec une surface 213C périphérique interne de l'embouche 213, qui est tronconique et inclinée par rapport à l'axe d'emmanchement X-X' de manière à s'éloigner de cet axe en allant de l'extrémité avant 213A vers l'extrémité arrière 213B de l'embouchure 213. Deux billes de verrouillage 40 sont visibles sur les figures. En pratique, l'élément femelle A comprend plus de deux billes 40 réparties autour de l'axe X_{A}-X'_{A}, par exemple six billes.

L'élément femelle A comprend un joint torique d'étanchéité 25, installé dans une gorge interne 237 de la partie creuse 233 du clapet 23. Le joint 25 est prévu pour coopérer de manière étanche avec la surface 13 périphérique externe de l'élément mâle B, afin de garantir l'étanchéité du raccordement des éléments A et B en configuration accouplée de ces éléments. A cet effet, le joint 25 est choisi avec un diamètre intérieur au repos légèrement inférieur au diamètre extérieur D₁₁ du corps 11 de l'élément mâle B. De plus, le joint 25 est constitué en un matériau polymère adapté à la nature du fluide destiné à transiter dans le raccord R et présente de bonnes caractéristiques d'étirabilité. Dans l'exemple représenté, le corps 11 a un diamètre extérieur D₁₁ de l'ordre de 9,8 mm, alors que le joint 25 a un diamètre intérieur au repos de l'ordre de 9 mm et est apte à être étiré jusqu'à obtenir un diamètre intérieur du joint étiré de l'ordre de 1,2 fois le diamètre intérieur du joint au repos.

Tel que montré à la figure 1, le joint 25 est monté étiré autour d'une portion avant 270 d'une bague d'interface 27, logée à l'intérieur de la partie creuse 233 du clapet 23. La bague d'interface 27 est apte à coulisser à l'intérieur de la partie creuse 233, parallèlement à l'axe d'emmanchement X-X'. Le déplacement axial de la bague d'interface 27 est limité par la longueur d'une gorge interne 239 de la partie creuse 233 dans laquelle coulisse une collerette radiale externe 271 de la bague d'interface 27. Plus spécifiquement, ie déplacement axial de la bague d'interface 27 est limité vers l'avant de l'élément femelle A, par la venue en butée de la collerette 271 contre le côté avant 239A de la gorge 239, et vers l'arrière de l'élément A, par la venue en butée de l'extrémité arrière 27B de la bague d'interface 27 contre le côté arrière 239B de la gorge 239. On note L₁ l'amplitude de coulissement de la collerette 271 dans la gorge 239, c'est-à-dire la longueur parcourue par la collerette 271 entre la position dans laquelle la collerette 271 est en butée contre le côté avant 239A de la gorge 239 et la position dans laquelle l'extrémité arrière 27B est en butée contre le côté arrière 239B de la gorge 239.

Un ressort 26 exerce sur un épaulement externe 273 de la bague d'interface 27 un effort élastique axial F₀ tendant à repousser la portion 270 en direction du côté avant 237A de la gorge 237 de réception du joint 25, ce déplacement étant limité par la collerette 271 en butée contre le côté avant 239A de la gorge 239.

Le joint 25 est maintenu en appui contre le côté avant 237A de la gorge 237 par une bague auxiliaire 29 chargée élastiquement par un ressort 28. La bague auxiliaire 29 est disposée autour de la bague d'interface 27 et est mobile en translation à l'intérieur de la partie creuse 233, parallèlement à l'axe d'emmanchement X-X'. La bague d'interface 27 et la bague auxiliaire 29 sont mobiles en translation dans la partie creuse 233 indépendamment l'une de l'autre parallèlement à l'axe X-X'.

Dans la configuration désaccouplée visible à la figure 1, le joint 25 est confiné dans la gorge 237, en appui contre le côté avant 237A. Plus spécifiquement, la bague auxiliaire 29 interagit avec le joint 25 au niveau d'une surface tronconique 295 périphérique interne de la bague 29. L'inclinaison de la surface 295 par rapport à l'axe d'emmanchement X-X' est telle que l'effort élastique du ressort 28 est transmis au joint 25 sous la forme d'un effort axial, tendant à plaquer le joint 25 contre le côté avant 237A de la gorge 237, associé à un effort radial, dirigé vers l'axe d'emmanchement X-X'. Toutefois, dans la configuration désaccouplée, tout mouvement radial de détente du joint 25 est empêché par la portion avant 270 de la bague d'interface 27.

Une surface 275 périphérique externe de la portion avant 270, destinée à recevoir le joint 25, est inclinée par rapport à l'axe d'emmanchement X-X' de manière à s'éloigner de cet axe en allant de l'extrémité avant 270A vers l'extrémité arrière 270B de la portion 270. De plus, la portion 270 présente une épaisseur e croissante depuis l'extrémité avant 270A vers l'extrémité arrière 270B. Dans l'exemple représenté, l'épaisseur e minimale de la portion 270, au niveau de l'extrémité 270A, est de l'ordre de 0,5 mm. Ainsi, une augmentation minimale du diamètre intérieur du joint 25 dans la configuration de la figure 1 est de l'ordre de 1 mm. En variante, et en fonction notamment du matériau constitutif de la bague d'interface 27, l'épaisseur e minimale de la portion 270 peut être différente de 0,5 mm, tout en assurant une augmentation minimale du diamètre intérieur du joint 25 de l'ordre de 1 mm en configuration désaccouplée.

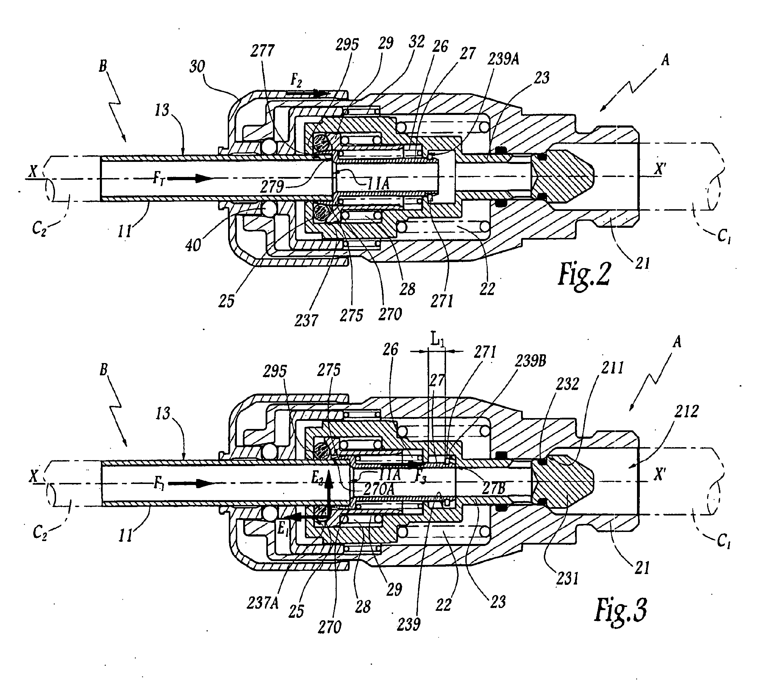

Lorsqu'il convient d'emmancher l'élément mâle B dans l'élément femelle A, ceux-ci sont rapprochés l'un de l'autre, comme représenté par la flèche F₁ des figures 2 à 4. L'extrémité avant 11A de l'élément mâle B repousse radialement vers l'extérieur les billes de verrouillage 40, qui dépassent dans le canal 212, contre la surface 213C tronconique de l'embouchure 213. Il en résulte un déplacement de la bague de verrouillage 30 vers l'arrière du corps 21, à l'encontre du ressort 32, comme représenté par la flèche F₂ de la figure 2. Le recul de la bague de verrouillage 30 se poursuit jusqu'à ce que les billes 40 soient suffisamment écartées pour permettre le passage du corps 11 de l'élément mâle B. Lorsqu'un tel écart des billes 40 est atteint, la bague de verrouillage 30 n'est plus entraînée vers l'arrière du corps 21, malgré l'avance du corps 11. A partir de cette position de la bague de verrouillage 30, le ressort 32 exerce sur les billes 40, via le manchon intérieur 33, un effort tendant à les repousser vers l'extrémité avant 213A de l'embouchure 213, le long de la surface tronconique 213C. La résultante des efforts exercés par les billes 40 sur l'élément mâle B s'oppose alors à un retrait de l'élément mâle B hors de l'élément femelle A, c'est-à-dire à un mouvement de déplacement de l'élément mâle B vers l'arrière. En revanche, la progression de l'élément mâle B dans le sens de la connexion n'est pas bloquée par les billes 40, grâce à l'inclinaison de la surface 213C.

Lors de sa progression dans le corps 21, l'élément mâle B est reçu dans un lamage 277, défini sur la portion avant 270 de la bague d'interface 27. Ainsi, lorsque l'extrémité avant 11A de l'élément mâle B passe à travers la section du joint torique 25, la portion avant 270 de la bague d'interface 27 est intercalée radialement entre l'extrémité 11A de l'élément mâle B et le joint 25. Il ne s'établit donc aucun contact entre l'extrémité 11A et le joint 25, ce qui élimine tout risque de détérioration du joint 25 par l'extrémité 11A. L'élément mâle B poursuit sa progression dans le corps 21 jusqu'à venir en butée contre un épaulement interne 279 de la bague d'interface 27 délimitant le fond du lamage 277, comme montré à la figure 2.

L'effort de rapprochement F₁ étant maintenu sur l'élément mâle B, celui-ci poursuit sa progression dans le corps 21, tout en étant en butée contre l'épaulement 279 de la bague d'interface 27. Il en résulte un déplacement concomitant de la bague d'interface 27 à l'encontre du ressort 26. Ce déplacement est représenté par la flèche F₃ de la figure 3 et entraîne la collerette 271 de la bague d'interface 27 en coulissement dans la gorge 239 du clapet 23. Dans cette étape, seule la bague d'interface 27 suit le mouvement de progression de l'élément mâle B car les forces de rappel des ressorts 22 et 28, associés respectivement au clapet 23 et à la bague auxiliaire 29, sont supérieures à la force de rappel du ressort 26 associé à la bague d'interface 27.

La bague auxiliaire 29 est repoussée par le ressort 28 vers le côté avant 237A de la gorge 237, de sorte que la surface 295 tronconique exerce sur le joint 25 un effort axial E₁ opposé au mouvement F₃ de recul de la bague d'interface 27. Du fait de l'inclinaison de la surface 295, cet effort axial E₁ est accompagné d'un effort radial E₂ tendant à repousser le joint 25 radialement en direction de l'axe d'emmanchement X-X'. Ces efforts E₁ et E₂, associés au recul F₃ de la bague d'interface 27 vers une position dans laquelle elle est décalée axialement par rapport au joint 25, permettent au joint 25 de glisser le long de la surface 275 tronconique de la portion 270 et de se rétreindre progressivement, jusqu'à reposer contre la surface périphérique externe 13 de l'élément mâle B, à une distance suffisante de l'extrémité 11A de l'élément mâle B pour ne pas être au contact d'irrégularités en saillie éventuellement présentes sur cette extrémité.

L'effort axial E₁ exercé par la bague auxiliaire 29 sur le joint 25 comprime le joint 25 contre le côté avant 237A de la gorge 237, ce qui contribue à plaquer le joint 25 contre la surface périphérique externe 13 de l'élément mâle B, en compensant la rémanence éventuelle du joint 25 qui passe d'une géométrie étirée à sa géométrie de fonctionnement. Cette géométrie de fonctionnement est visible sur les figures 3 à 5.

Lorsque le joint 25 coopère de manière étanche avec la surface périphérique externe 13 de l'élément mâle B, l'extrémité arrière 27B de la bague d'interface 27 n'est pas encore parvenue en butée contre le côté arrière 239B de la gorge 239. La partie pleine 231 du clapet 23 équipée du joint 232 est alors toujours en appui étanche contre le siège 211, sous l'action élastique du ressort 22, de sorte que le canal 212 de l'élément femelle A reste fermé. Ainsi, le clapet 23 n'ouvre le circuit qu'une fois l'étanchéité du raccordement garantie par le placage étanche du joint 25 contre la surface périphérique externe 13 de l'élément mâle B. Cette sécurité de fonctionnement résulte du coulissement possible de la bague d'interface 27 par rapport au clapet 23 et de la différence d'effort de rappel exercé par le ressort 22, associé au clapet 23, et par le ressort 26, associé à la bague d'interface 27.

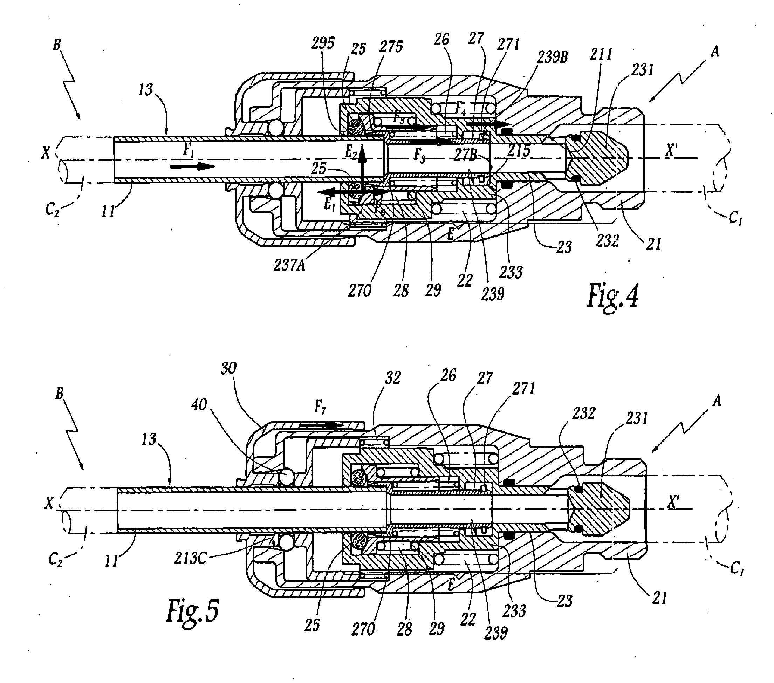

L'effort F₁ de rapprochement étant maintenu sur l'élément mâle B, celui-ci continue de déplacer la bague d'interface 27 à l'encontre du ressort 26, dans le sens de la flèche F₃ de la figure 3. L'extrémité arrière 27B de la bague d'interface 27 vient alors en butée contre le côté arrière 239B de la gorge 239, comme montré sur la figure 3, et transmet le déplacement de l'élément mâle B au clapet 23, qui recule à son tour à l'encontre du ressort 22 comme représenté par la flèche F₄ de la figure 4. Ainsi, la partie pleine 231 du clapet 23 équipée du joint 232 est déplacée à l'écart de son siège 211, ce qui provoque l'ouverture du circuit et la mise en communication des canalisations C₁ et C₂. La bague auxiliaire 29 étant reliée au clapet 23 par l'intermédiaire du ressort 28, le déplacement de l'élément mâle B induit un déplacement concomitant dans l'élément femelle A de l'ensemble E comprenant le clapet 23, la bague d'interface 27, la bague auxiliaire 29 et le joint 25, comme montré par les flèches F₃ à F₆ de la figure 4. Dans cette étape, les efforts E₁ et E₂ de placage du joint 25 contre la surface périphérique externe 13 de l'élément mâle B, exercés par la bague auxiliaire 29, sont maintenus, puisque c'est tout l'ensemble E qui se déplace. De plus, le joint 25 et l'élément mâle B étant déplacés simultanément, la surface intérieure du joint n'est plus sollicitée par l'avance de l'élément mâle B.

Le déplacement de l'ensemble E des éléments 23, 25, 27 et 29 se poursuit jusqu'à ce qu'un épaulement radial externe de la partie creuse 233 du clapet 23 arrive en butée contre un épaulement interne 215 du corps 21, comme montré à la figure 4. Le raccord R est alors en configuration raccordée de ses éléments femelle A et mâle B.

Comme il ressort des étapes de raccordement décrites précédemment, la connexion des éléments A et B est une connexion en trois temps, qui comprend une poussée de l'élément mâle B au contact de la pièce d'interface 27 à l'encontre du ressort 26, alors que le clapet 23 ferme le circuit, puis la poussée de l'ensemble E des éléments 23, 25, 27 et 29 à l'encontre du ressort 22, jusqu'à ce que le clapet 23 atteigne la butée 215 du corps 21 et ouvre le circuit.

Lorsque le circuit est ouvert, la pression de circulation du fluide transitant dans les canalisations C₁ et C₂ tend à repousser le clapet 23 en direction du siège 211. Ceci contribue à pousser la bague auxiliaire 29, liée au clapet 23 par le ressort 28, en direction du joint 25. Il en résulte une amplification des efforts E₁ et E₂ exercés par la bague auxiliaire 29 sur le joint 25.

Le désaccouplement des éléments A et B du raccord R de l'invention est réalisé en exerçant sur la bague de verrouillage 30, et en maintenant jusqu'à complète déconnexion, un effort axial dirigé vers la canalisation C₁ à l'encontre du ressort 32, comme représenté par la flèche F₇ de la figure 5. Les billes de verrouillage 40 sont ainsi déplacées le long de la surface 213C tronconique et s'écartent, par un mouvement radial vers l'extérieur, de la zone de passage de l'élément mâle B dans l'élément femelle A, de sorte qu'elles ne bloquent plus le déplacement de l'élément mâle B dans le sens de la déconnexion. Le ressort 22 est alors apte à repousser sans résistance l'ensemble E formé par le clapet 23, la bague d'interface 27, la bague auxiliaire 29 et le joint 25, ainsi que l'élément mâle B. La bague d'interface 27 et l'élément mâle B sont repoussés par le ressort 26 qui exerce un effort de rappel inférieur à celui du ressort 22, de sorte que la partie pleine 231 du clapet 23 équipée du joint 232 arrive en appui étanche contre le siège 211 et ferme le canal 212 de l'élément femelle A avant que la bague d'interface 27, sous l'action du ressort 26, n'arrive au contact du joint 25. Ainsi, l'étanchéité est maintenue tant que le circuit est partiellement ouvert. De cette manière, les éléments A et B reviennent dans la configuration de la figure 3.

Lorsque la partie pleine 231 du clapet 23 est en appui contre le siège 211, l'effort exercé par le ressort 26 déplace l'extrémité avant 270A de la bague d'interface 27 au contact du joint 25. L'inclinaison de la surface 275 tronconique permet la transmission d'un effort radial, dirigé à l'opposé de l'axe d'emmanchement X-X', sur la surface intérieure du joint 25. Il en résulte un étirement progressif du joint 25 autour de la surface 275, au fur et à mesure du déplacement de la bague d'interface 27 à l'opposé de la canalisation C₁. Le déplacement de la bague d'interface 27 à l'opposé de la canalisation C₁ se poursuit jusqu'à ce que la collerette 271 vienne en butée contre le côté avant 239A de la gorge 239. La bague d'interface 27 retrouve ainsi sa position initiale, dans laquelle la portion avant 270 est intercalée radialement entre le joint 25 et la surface périphérique externe 13 de l'élément mâle B. Dans cette position, la portion 270 de la bague d'interface 27 et la bague auxiliaire 29 confinent le joint 25 dans la gorge 237 du clapet 23, de sorte que le joint 25 est protégé de toute pollution susceptible de se détacher de l'élément mâle B lorsque celui-ci est introduit dans le lamage 277 de la bague d'interface 27 ou en est retiré. De plus, la butée de la collerette 271 contre le côté avant 239A de la gorge 239 limite l'avancement de la bague d'interface 27 à l'opposé de la canalisation C₁, ce qui permet d'éviter le matage de l'extrémité 270A au contact de la gorge 237.

L'élément mâle B peut ensuite être extrait de l'élément femelle A par un opérateur, qui maintient toujours la bague de verrouillage 30 en position reculée en direction de la canalisation C₁. Lorsque l'extrémité avant 11A de l'élément mâle B passe à travers la section du joint 25, celui-ci est de nouveau protégé de tout contact avec l'extrémité 11A par la portion 270 de la bague d'interface 27, intercalée entre le joint 25 et l'extrémité 11A de l'élément mâle B.

En vue d'obtenir un étirement efficace du joint 25 autour de la surface 275 tronconique de la bague d'interface 27, la portion 270 est conçue avec une épaisseur e minimale au niveau de son extrémité avant 270A. De plus, le joint 25 est choisi avec un diamètre de tore relativement grand, de sorte que l'effort d'étirement est appliqué efficacement à distance du centre de la section du joint torique 25.

En variante, le joint 25 peut être monté sans étirement autour de la portion avant 270 de la bague d'interface 27, la bague auxiliaire 29 étant alors prévue pour comprimer le joint 25 contre la surface périphérique 13 de l'élément mâle B en position reculée de la bague d'interface 27. Le joint 25 coopère alors de manière étanche avec la surface 13, de sorte qu'il garantit l'étanchéité du raccordement des éléments A et B en configuration accouplée de ces éléments. Dans cette variante, la géométrie de la bague auxiliaire 29, et en particulier l'inclinaison de la surface tronconique 295, est adaptée pour obtenir la compression du joint 25 souhaitée et son placage contre la surface périphérique 13 de l'élément mâle B.

Un élément femelle A conforme à ce premier mode de réalisation de l'invention permet donc le raccordement d'un élément mâle B d'extrémité cylindrique lisse avec l'élément femelle A sans détérioration du joint d'étanchéité 25. De même, le désaccouplement des éléments A et B n'entraîne pas de dégradation du joint 25. En effet, tout contact entre l'extrémité avant 11A de l'élément mâle et le joint 25 est éliminé grâce à la bague d'interface 27. Dès lors, la fiabilité et la durée de vie du joint 25 sont accrues, ce qui réduit le risque de fuite lors d'un raccordement et la fréquence de remplacement du joint 25.

En outre, la connexion et la déconnexion en trois temps d'un raccord R conforme à ce premier mode de réalisation permet de garantir l'étanchéité du raccordement des éléments A et B. Par une conception adaptée de l'élément femelle A, et en particulier par un choix adapté des efforts de rappel des ressorts 22 et 26 et de l'amplitude L₁ de coulissement de la collerette 271 dans la gorge 239, il est en effet possible de découpler la phase de compression/étirement du joint 25 par rapport à la surface périphérique externe 13 de l'élément mâle B et la phase d'ouverture ou de fermeture du circuit par le clapet 23. Une sécurité de fonctionnement accrue du raccord R est ainsi obtenue.

Dans le deuxième mode de réalisation représenté à la figure 6, les éléments analogues au premier mode de réalisation portent des références identiques. Dans ce deuxième mode de réalisation, la bague d'interface 27 est conçue avec une surface 275 périphérique externe présentant deux inclinaisons opposées formant une bosse 276. Lorsque l'élément femelle A est en configuration désaccouplée, le joint 25 est disposé en partie basse de la bosse 276, latéralement sur l'arrière par rapport au sommet de la bosse, et présente un étirement limité ou aucun étirement par rapport à la configuration au repos du joint 25. Lorsque l'élément mâle B est emmanché dans l'élément femelle A et arrive en butée contre la bague d'interface 27, celle-ci accompagne le déplacement de l'élément mâle B, vers une position dans laquelle la bague d'interface 27 est décalée axialement par rapport au joint 25, ce qui provoque le déplacement de la bosse 276 par rapport au joint 25. Le joint 25 est d'abord étiré. La portion avant de la bague d'interface 27 est alors interposée radialement entre le joint 25 et l'extrémité avant 11A de l'élément mâle B. L'étirement est maximal lorsque le joint 25 atteint le sommet de la bosse 276, puis le joint 25 se rétreint progressivement le long de la pente descendante de la surface 275 jusqu'à être plaqué contre la surface périphérique 13 de l'élément mâle B. Dans cette position, le joint 25 coopère de manière étanche avec la surface 13, de sorte qu'il garantit l'étanchéité du raccordement des éléments A et B en configuration accouplée de ces éléments. Ce deuxième mode de réalisation permet ainsi d'éviter des problèmes de rémanence du joint 25 résultant d'un étirement prolongé en configuration désaccouplée de l'élément femelle A, tout en protégeant le joint 25 à l'accouplement et au désaccouplement. Il en résulte une efficacité d'étanchéité améliorée.

Dans le troisième mode de réalisation représenté à la figure 7, les éléments analogues au premier mode de réalisation portent des références identiques. Dans ce troisième mode de réalisation, le joint 25 est destiné à coopérer de manière étanche avec une surface 15 périphérique interne de l'élément mâle B afin de garantir l'étanchéité du raccordement des éléments A et B en configuration accouplée de ces éléments. A cet effet, le joint 25 est monté dans sa configuration de repos dans une gorge 238 radiale externe du clapet 23. La bague d'interface 27, disposée autour du clapet 23, est destinée à être intercalée entre le joint 25 et la surface 15 périphérique interne de l'élément mâle B lors du raccordement et du désaccouplement des éléments A et B. Lors du raccordement, la progression de l'élément mâle B provoque un déplacement de la bague d'interface 27 vers une position dans laquelle elle est décalée axialement par rapport au joint 25, alors que la bague auxiliaire 29 exerce sur le joint 25 des efforts tendant à étirer le joint 25 pour le plaquer contre la surface 15 de l'élément mâle B. En variante, le joint 25 peut être monté dans une configuration légèrement étirée autour de la bague auxiliaire 29, puis étiré davantage sous l'action de la bague auxiliaire 29 lors du raccordement des éléments A et B. Selon une autre variante, le joint 25 peut être monté comprimé entre la bague auxiliaire 29 et la bague d'interface 27 en configuration désaccouplée, puis étiré sous l'action de la bague auxiliaire 29 lors du raccordement des éléments A et B. Dans ce troisième mode de réalisation, l'inclinaison de la surface tronconique 295 périphérique externe de la bague auxiliaire 29 est adaptée pour augmenter la composante radiale E'₂ exercée par la bague auxiliaire 29 sur la surface intérieure du joint 25.

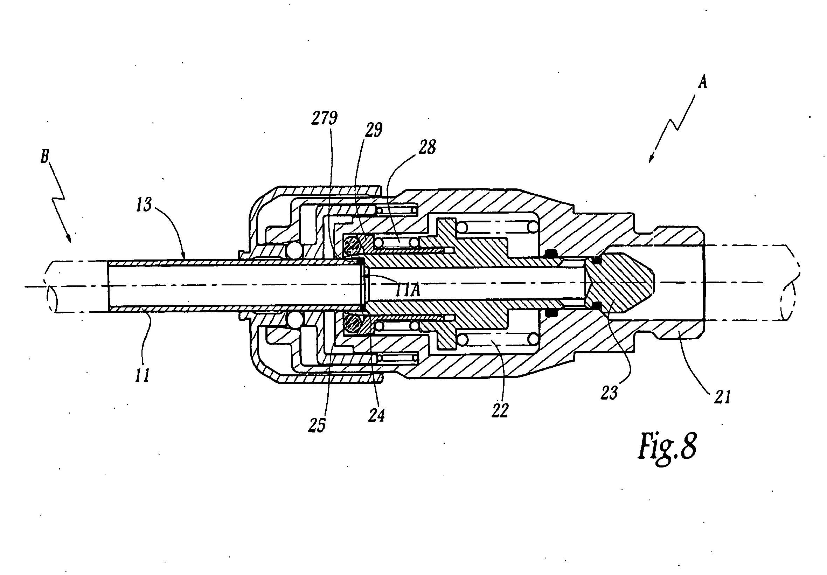

Dans le quatrième mode de réalisation représenté à la figure 8, les éléments analogues au premier mode de réalisation portent des références identiques. Dans ce quatrième mode de réalisation, la bague d'interface est constituée par une partie du clapet 23 et s'interpose radialement entre le joint 25, qui est logé dans une gorge interne de l'élément femelle A, et l'extrémité 11A de l'élément mâle B, lors de l'accouplement et du désaccouplement des éléments A et B. Comme dans les modes de réalisation précédents, la progression de l'élément mâle B lors du raccordement provoque un déplacement de la partie du clapet 23 formant la bague d'interface vers une position dans laquelle elle est décalée axialement par rapport au joint 25. Toutefois, dans cette variante, l'avancée de l'élément mâle B induit le déplacement du clapet 23 à l'écart du siège formé par le corps 21 de l'élément femelle A avant le placage du joint 25 contre la surface 13 de l'élément mâle B, c'est-à-dire avant que le joint 25 ne coopère de manière étanche avec la surface 13 de l'élément mâle B et ne garantisse l'étanchéité du raccordement des éléments A et B. Une telle coopération étanche entre le joint 25 et la surface 13 intervient en configuration accouplée des éléments A et B. Il est alors nécessaire de prévoir une étanchéité provisoire au cours de la connexion des éléments A et B. A cet effet, un joint plat 24 est prévu au niveau de l'épaulement interne 279 destiné à recevoir en butée l'extrémité avant 11A de l'élément mâle B. L'élément femelle A de ce quatrième mode de réalisation permet d'obtenir le raccordement des éléments A et B en deux temps, avec une unique poussée de l'élément mâle B au contact du clapet 23 jouant le rôle de bague d'interface, jusqu'à la venue en butée du clapet 23 contre le corps 21. Le déplacement vers l'avant du clapet 23 lors de la déconnexion est limité par sa venue en appui contre le siège du corps 21.

L'invention n'est pas limitée aux exemples décrits et représentés. En particulier, quel que soit le mode de réalisation, les surfaces périphériques tronconiques de la bague d'interface et de la bague auxiliaire peuvent comporter plusieurs portions de pente présentant des inclinaisons différentes. Notamment, dans le troisième mode de réalisation, il peut être avantageux d'avoir deux inclinaisons différentes de la surface 295 de la bague auxiliaire 29, de manière à assurer, d'une part, l'étirement du joint 25 pour sa mise en place contre la surface périphérique interne 15 de l'élément mâle B et, d'autre part, le maintien du joint 25 contre la surface 15.

## Revendications

1. Elément femelle (A) de raccord (R) destiné à la jonction amovible de canalisations (C₁, C₂) parcourues par un fluide sous pression, cet élément femelle (A) étant apte à recevoir un élément mâle (B) en emmanchement selon un axe longitudinal (X-X'), l'élément femelle (A) comprenant un joint d'étanchéité (25), logé à l'intérieur d'un corps (21) de l'élément femelle et apte à coopérer de manière étanche avec une surface périphérique (13 ; 15) d'un élément mâle (B) emmanché dans l'élément femelle, **caractérisé en ce que** l'élément femelle (A) comprend en outre un organe d'interface (27 ; 23), logé à l'intérieur du corps (21) et mobile en translation parallèlement à l'axe d'emmanchement (X-X'), cet organe d'interface (27 ; 23) étant apte à être déplacé axialement par un élément mâle (B) en cours d'emmanchement dans l'élément femelle, depuis une première position, dans laquelle l'organe d'interface (27; 23) est intercalé radialement entre le joint d'étanchéité (25) et la surface périphérique (13 ; 15) de l'élément mâle, vers une deuxième position, dans laquelle l'organe d'interface (27) est décalé axialement par rapport au joint d'étanchéité (25) et le joint d'étanchéité (25) repose de manière étanche sur la surface périphérique (13 ; 15) de l'élément mâle.

2. Elément femelle de raccord selon la revendication 1, **caractérisé en ce que** l'organe d'interface (27 ; 23) est apte à être déplacé axialement depuis la deuxième position vers la première position lors du désaccouplement de l'élément femelle (A) et d'un élément mâle (B) emmanché dans l'élément femelle.

3. Elément femelle de raccord selon l'une quelconque des revendications 1 ou 2, **caractérisé en ce qu'**il comprend des moyens (26 ; 22) de rappel élastique aptes à repousser axialement l'organe d'interface (27 ; 23) vers la première position.

4. Elément femelle de raccord selon l'une quelconque des revendications précédentes, **caractérisé en ce que** l'organe d'interface (27 ; 23) a une épaisseur (e) minimale au niveau de son extrémité (270A) la plus proche du joint d'étanchéité (25) dans la deuxième position de l'organe d'interface.

5. Elément femelle de raccord selon l'une quelconque des revendications précédentes, **caractérisé en ce que** l'organe d'interface (27 ; 23) comporte une surface périphérique (275) inclinée par rapport à l'axe d'emmanchement (X-X'), cette surface étant apte à recevoir en appui le joint d'étanchéité (25) lorsque l'organe d'interface est intercalé radialement entre le joint d'étanchéité (25) et la surface périphérique (13 ; 15) d'un élément mâle (B) emmanché dans l'élément femelle (A).

6. Elément femelle de raccord selon l'une quelconque des revendications précédentes, **caractérisé en ce qu'**il comprend des moyens (29) de charge du joint d'étanchéité (25) en direction de la surface périphérique (13 ; 15) d'un élément mâle (B) emmanché dans l'élément femelle (A).

7. Elément femelle de raccord selon la revendication 6, **caractérisé en ce que** les moyens de charge comprennent un organe auxiliaire (29) apte à exercer sur le joint d'étanchéité (25) un effort axial (E₁) dirigé à l'encontre du déplacement (F₃) de l'organe d'interface (27 ; 23) de la première position vers la deuxième position.

8. Elément femelle de raccord selon la revendication 7, **caractérisé en ce que** l'organe auxiliaire (29) comporte une surface périphérique (295) inclinée par rapport à l'axe d'emmanchement (X-X'), apte à exercer sur le joint d'étanchéité (25) un effort radial (E₂ ; E'₂) dirigé vers la surface périphérique (13 ; 15) d'un élément mâle (B) en cours d'emmanchement dans l'élément femelle (A).

9. Elément femelle de raccord selon l'une quelconque des revendications précédentes, **caractérisé en ce qu'**il comprend un clapet (23) de fermeture de l'élément femelle (A), logé à l'intérieur du corps (21) et mobile en translation parallèlement à l'axe d'emmanchement (X-X'), ce clapet (23) étant apte à être déplacé axialement à l'encontre de moyens (22) de rappel élastique par un élément mâle (B) en cours d'emmanchement dans l'élément femelle.

10. Elément femelle de raccord selon la revendication 9, **caractérisé en ce que** le clapet (23) comporte une gorge (237 ; 238) de réception du joint d'étanchéité (25).

11. Elément femelle de raccord selon l'une quelconque des revendications 9 ou 10, **caractérisé en ce que** l'organe d'interface (27) est apte à coulisser, par rapport au clapet (23), à l'encontre de premiers moyens (26) de rappel élastique, alors que le clapet (23) est apte à coulisser par rapport au corps (21) à l'encontre de deuxièmes moyens (22) de rappel élastique, les premiers moyens (26) exerçant un effort de rappel inférieur à l'effort de rappel des deuxièmes moyens (22).

12. Elément femelle de raccord selon la revendication 9, **caractérisé en ce que** l'organe d'interface (27) est solidaire en déplacement du clapet (23).

13. Elément femelle de raccord selon la revendication 12, **caractérisé en ce qu'**il comprend un second joint d'étanchéité (24) disposé dans un épaulement (279) de l'organe d'interface (27) destiné à recevoir en butée un élément mâle (B) en cours d'emmanchement dans l'élément femelle (A).

14. Elément femelle de raccord selon l'une quelconque des revendications précédentes, **caractérisé en ce que** le diamètre intérieur du joint d'étanchéité (25) lorsque l'organe d'interface (27) est dans la première position est supérieur au diamètre intérieur du joint d'étanchéité (25) lorsque l'organe d'interface (27) est dans la deuxième position, le joint d'étanchéité (25) coopérant de manière étanche avec la surface périphérique externe (13) d'un élément mâle (B) en cours d'emmanchement dans l'élément femelle (A) lorsque l'organe d'interface (27) est dans la deuxième position.

15. Elément femelle de raccord selon l'une quelconque des revendications 1 à 13, **caractérisé en ce que**, lors du déplacement de l'organe d'interface (27 ; 23) d'une position correspondant à une configuration désaccouplée de l'élément femelle (A) vers la deuxième position, le joint d'étanchéité (25) atteint au moins une configuration dans laquelle le diamètre intérieur du joint d'étanchéité (25) est supérieur au diamètre intérieur du joint d'étanchéité (25) lorsque l'élément femelle est en configuration désaccouplée.

16. Elément femelle de raccord selon l'une quelconque des revendications 1 à 13, **caractérisé en ce que** le joint d'étanchéité (25) s'étire contre la surface périphérique interne (15) d'un élément mâle (B) en cours d'emmanchement dans l'élément femelle (A) lors du déplacement de l'organe d'interface (27) de la première position vers la deuxième position.

17. Elément femelle de raccord selon l'une quelconque des revendications précédentes, **caractérisé en ce qu'**il comprend un mécanisme de verrouillage d'un élément mâle (B) en cours d'emmanchement et en configuration emmanchée dans l'élément femelle (A), ce mécanisme comportant des organes de verrouillage (40), propres à coopérer avec une surface périphérique (13) de l'élément mâle, et une bague de verrouillage (30), mobile en translation par rapport au corps (21) et parallèlement à l'axe d'emmanchement (X-X'), cette bague (30) étant apte, sous l'action de moyens (32) de rappel élastique, à repousser radialement les organes de verrouillage (40) en direction de l'axe d'emmanchement (X-X') le long d'une surface périphérique (213C) du corps (21) inclinée par rapport à l'axe d'emmanchement.

18. Raccord (R) pour la jonction amovible de canalisations (C₁, C₂) parcourues par un fluide sous pression, comprenant un élément mâle (B) d'extrémité cylindrique lisse et un élément femelle (A) propres à s'emmancher l'un dans l'autre, **caractérisé en ce que** l'élément femelle (A) est selon l'une quelconque des revendications précédentes.

## Claims

1. Female element (A) of a connector (R) designed for the removable joining of ducts (C₁, C₂) through which a pressurized fluid flows, this female element (A) being able to receive a male element (B) by fitment along a longitudinal axis (X-X'), the female element (A) comprising a seal (25), housed inside a body (21) of the female element and able to interact in a sealed manner with a peripheral surface (13; 15) of a male element (B) fitted into the female element, **characterized in that** the female element (A) also comprises an interface member (27; 23), housed inside the body (21) and able to move in translation parallel to the fitment axis (X-X'), this interface member (27; 23) being capable of being moved axially by a male element (B) during fitment into the female element, from a first position, in which the interface member (27; 23) is inserted radially between the seal (25) and the peripheral surface (13; 15) of the male element, to a second position, in which the interface member (27) is offset axially relative to the seal (25) and the seal (25) rests in a sealed manner on the peripheral surface (13; 15) of the male element.

2. Female connector element according to Claim 1, **characterized in that** the interface member (27; 23) is able to be moved axially from the second position to the first position during the uncoupling of the female element (A) from a male element (B) fitted into the female element.

3. Female connector element according to either one of Claims 1 or 2, **characterized in that** it comprises elastic return means (26; 22) capable of axially pushing the interface member (27; 23) towards the first position.

4. Female connector element according to any one of the preceding claims, **characterized in that** the interface member (27; 23) has a minimum thickness (e) at its end (270A) closest to the seal (25) in the second position of the interface member.

5. Female connector element according to any one of the preceding claims, **characterized in that** the interface member (27; 23) comprises a peripheral surface (275) that is inclined relative to the axis of fitment (X-X'), this surface being able to receive the seal (25) pressing thereon when the interface member is inserted radially between the seal (25) and the peripheral surface (13; 15) of a male element (B) fitted into the female element (A).

6. Female connector element according to any one of the preceding claims, **characterized in that** it comprises loading means (29) for loading the seal (25) in the direction of the peripheral surface (13; 15) of a male element (B) fitted into the female element (A).

7. Female connector element according to Claim 6, **characterized in that** the loading means comprise an auxiliary member (29) able to exert on the seal (25) an axial force (E₁) directed against the movement (F₃) of the interface member (27; 23) from the first position to the second position.

8. Female connector element according to Claim 7, **characterized in that** the auxiliary member (29) comprises a peripheral surface (295) that is inclined relative to the axis of fitment (X-X'), able to exert on the seal (25) a radial force (E₂; E'₂) directed towards the peripheral surface (13; 15) of a male element (B) during fitment into the female element (A).

9. Female connector element according to any one of the preceding claims, **characterized in that** it comprises a valve (23) for closing the female element (A), housed inside the body (21) and able to move in translation parallel to the axis of fitment (X-X'), this valve (23) being able to be moved axially against elastic return means (22) by a male element (B) during fitment into the female element.

10. Female connector element according to Claim 9, **characterized in that** the valve (23) comprises a groove (237; 238) for receiving the seal (25).

11. Female connector element according to either one of Claims 9 or 10, **characterized in that** the interface member (27) is able to slide, relative to the valve (23), against first elastic return means (26), while the valve (23) is able to slide relative to the body (21) against second elastic return means (22), the first means (26) exerting a return force that is weaker than the return force of the second means (22).

12. Female connector element according to Claim 9, **characterized in that** the interface member (27) is integral in movement with the valve (23).

13. Female connector element according to Claim 12, **characterized in that** it comprises a second seal (24) placed in a shoulder (279) of the interface member (27) designed to receive in abutment a male element (B) during fitment into the female element (A).

14. Female connector element according to any one of the preceding claims, **characterized in that** the internal diameter of the seal (25) when the interface member (27) is in the first position is greater than the internal diameter of the seal (25) when the interface member (27) is in the second position, the seal (25) interacting in a sealed manner with the outer peripheral surface (13) of a male element (B) during fitment into the female element (A) when the interface member (27) is in the second position.

15. Female connector element according to any one of Claims 1 to 13, **characterized in that**, during the movement of the interface member (27; 23) from a position corresponding to an uncoupled configuration of the female element (A) to the second position, the seal (25) reaches at least one configuration in which the internal diameter of the seal (25) is greater than the internal diameter of the seal (25) when the female element is in an uncoupled configuration.

16. Female connector element according to any one of Claims 1 to 13, **characterized in that** the seal (25) stretches against the inner peripheral surface (15) of a male element (B) during fitment into the female element (A) during the movement of the interface member (27) from the first position to the second position.

17. Female connector element according to any one of the preceding claims, **characterized in that** it comprises a mechanism for locking a male element (B) during fitment and in the fitted configuration in the female element (A), this mechanism comprising locking members (40), suitable for interacting with a peripheral surface (13) of the male element, and a locking ring (30), that can be moved in translation relative to the body (21) and parallel to the axis of fitment (X-X'), this ring (30) being able, under the action of elastic return means (32), to radially push the locking members (40) in the direction of the axis of fitment (X-X') along a peripheral surface (213C) of the body (21) that is inclined relative to the axis of fitment.

18. Connector (R) for removably joining ducts (C₁, C₂) through which a pressurized fluid flows, comprising a smooth cylindrically terminated male element (B) and a female element (A) able to fit into one another, **characterized in that** the female element (A) is according to any one of the preceding claims.

## Patentansprüche

1. Aufnahmeelement (A) einer Kupplung (R), die zur lösbaren Verbindung von Leitungen (C₁, C₂) dient, die von einem unter Druck stehenden Fluid durchströmt werden, wobei dieses Aufnahmeelement (A) geeignet ist, entsprechend einer Längsachse (X-X') ein Einsteckelement (B) in Ineinandersteckung aufzunehmen, wobei das Aufnahmeelement (A) eine Dichtung (25) aufweist, die im Inneren eines Körpers (21) des Aufnahmeelements angeordnet ist und geeignet ist, in dichtender Weise mit einer Umfangsfläche (13; 15) eines Einsteckelemcnts (B) zusammenzuarbeiten, das in das Aufnahmeelement eingesteckt ist, wobei das Aufnahmeelement (A) außerdem ein Zwischenorgan (27; 23) umfasst, das im Inneren des Körpers (21) angeordnet ist und translatorisch parallel zur Einsteckachse (X-X') beweglich ist, wobei dieses Zwischenorgan (27; 23) geeignet ist, von einem Einsteckelement (B) während des Einsteckens in das Aufnahmeelement axial von einer ersten Position, in der das Zwischenorgan (27; 23) radial zwischen der Dichtung (25) und der Umfangsfläche (13; 15) des Einsteckelements gelagert ist, in eine zweite Position verschoben zu werden, in der das Zwischenorgan (27) axial in Bezug auf die Dichtung (25) gelöst ist, **dadurch gekennzeichnet, dass** die Dichtung (25) in dichtender Weise auf der Umfangsfläche (13; 15) des Einsteckelements in der zweiten Position ruht.

2. Kupplungsaufnahmeelement nach Anspruch 1, **dadurch gekennzeichnet, dass** das Zwischenorgan (27; 23) geeignet ist, von der zweiten Position in die erste Position bei der Entkupplung des Aufnahmeelements (A) von einem Einsteckelement (B), das in das Aufnahmeelement eingesteckt ist, verschoben zu werden.

3. Kupplungsaufnahmeelement nach einem beliebigen der Ansprüche 1 oder 2, **dadurch gekennzeichnet, dass** es elastische Rückstellmittel (26; 22) umfasst, die geeignet sind, das Zwischenelement (27; 23) axial in die erste Position zurückzudrücken.

4. Kupplungsaufnahmeelement nach einem beliebigen der vorhergehenden Ansprüche, **dadurch gekennzeichnet, dass** das Zwischenorgan (27; 23) an seinem Ende (270A), das der Dichtung (25) in der zweiten Position des Zwischenorgans am nächsten liegt, eine minimale Dicke (e) aufweist.

5. Kupplungsaufnahmeelement nach einem beliebigen der vorhergehenden Ansprüche, **dadurch gekennzeichnet, dass** das Zwischenorgan (27; 23) eine in Bezug auf die Einsteckachse (X-X') geneigte Umfangsfläche (275) umfasst, wobei diese Fläche geeignet ist, in Auflage die Dichtung (25) aufzunehmen, wenn das Zwischenorgan radial zwischen der Dichtung (25) und der Umfangsfläche (13; 50) eines Einsteckelements (B) liegt, das in das Aufnahmeelement (A) eingesteckt ist.

6. Kupplungsaufnahmeelement nach einem beliebigen der vorhergehenden Ansprüche, **dadurch gekennzeichnet, dass** es Mittel (29) zum Vorspannen der Dichtung (25) in Richtung der Umfangsfläche (13; 15) eines in das Aufnahmeelement (A) eingesteckten Einsteckelements (B) aufweist.

7. Kupplungsaufnahmeelement nach Anspruch 6, **dadurch gekennzeichnet, dass** die Mittel zum Vorspannen ein Hilfsorgan (29) umfassen, das geeignet ist, auf die Dichtung (25) eine axiale Kraft (E₁) auszuüben, die gegen die Verschiebung (F₃) des Zwischenorgans (27; 23) von der ersten Position in die zweite Position gerichtet ist.

8. Kupplungsaufnahmeelement nach Anspruch 7, **dadurch gekennzeichnet, dass** das Hilfsorgan (29) eine in Bezug auf die Einsteckachse (X-X') geneigte Umfangsfläche (295) umfasst, die geeignet ist, auf die Dichtung (25) eine radiale Kraft (E₂; E'₂) auszuüben, die zur Umfangsfläche (13; 15) eines Einsteckelements (B) während des Einsteckens in das Aufnahmeelement (A) gerichtet ist.

9. Kupplungsaufnahmeelement nach einem beliebigen der vorhergehenden Ansprüche, **dadurch gekennzeichnet, dass** es ein Ventil (23) zum Verschließen des Aufnahmeelements (A) umfasst, das im Inneren des Körpers (21) gelagert ist und translatorisch parallel zur Einsteckachse (X-X') beweglich ist, wobei dieses Ventil (23) geeignet ist, axial gegen die elastischen Rückstellmittel (22) durch ein Einsteckelement (B) während des Einsteckens in das Aufnahmeelement verschoben zu werden.

10. Kupplungsaufnahmeelement nach Anspruch 9, **dadurch gekennzeichnet, dass** das Ventil (23) eine Aufnahmenut (237; 238) für die Dichtung (25) aufweist.

11. Kupplungsaufnahmeelement nach einem beliebigen der Ansprüche 9 oder 10, **dadurch gekennzeichnet, dass** das Zwischenorgan (27) geeignet ist, in Bezug auf das Ventil (23) gegen erste elastische Rückstellmittel (26) zu gleiten, wobei das Ventil (23) geeignet ist, in Bezug auf den Körper (21) gegen zweite elastische Rückstellmittel (22) zu gleiten, wobei die ersten Mittel (26) eine Rückstellkraft ausüben, die kleiner als die Rückstellkraft der zweiten Mittel (22) ist.

12. Kupplungsaufnahmeelement nach Anspruch 9, **da durch gekennzeichnet, dass** das Zwischenorgan (27) hinsichtlich der Verschiebung mit dem Ventil (23) verbunden ist.

13. Kupplungsaufnahmeelement nach Anspruch 12, **dadurch gekennzeichnet, dass** es eine zweite Dichtung (24) aufweist, die in einer Schulter (279) des Zwischenorgans (27) angeordnet ist und vorgesehen ist, als Anschlag ein Einsteckelement (B) während des Einsteckens in das Aufnahmeelement (A) aufzunehmen.

14. Kupplungsaufnahmeelement nach einem beliebigen der vorhergehenden Ansprüche, **dadurch gekennzeichnet, dass** der innere Durchmesser der Dichtung (25), wenn das Zwischenorgan (27) in seiner ersten Stellung ist, größer als der Innendurchmesser der Dichtung (25) ist, wenn das Zwischenorgan (27) in der zweiten Position ist, wobei die Dichtung (25) in dichtender Weise mit der externen Umfangsfläche (13) eines Einsteckelements (B) während des Einsteckens in das Aufnahmeelement (A) zusammenarbeitet, wenn das Zwischenorgan (27) in seiner zweiten Position ist.

15. Kupplungsaufnahmeelement nach einem beliebigen der Ansprüche 1 bis 13, **dadurch gekennzeichnet, dass** die Dichtung (25) bei der Verschiebung des Zwischenorgans (27; 23) von einer Position entsprechend einem entkuppelten Zustand des Aufnahmeelements (A) in die zweite Position mindestens einen Zustand erreicht, in dem der innere Durchmesser der Dichtung (25) größer ist als der Innendurchmesser der Dichtung (25), wenn das Aufnahmeelement im entkuppelten Zustand ist.

16. Kupplungsaufnahmeelement nach einem beliebigen der Ansprüche 1 bis 13, **dadurch gekennzeichnet, dass** die Dichtung (25) sich gegen die innere Umfangsfläche (15) eines Einsteckelements (B) während des Einsteckens in das Aufnahmeelement (A) bei der Verschiebung des Zwischenorgans (27) von der ersten Position in die zweite Position auseinanderzieht.

17. Kupplungsaufnahmeelement nach einem beliebigen der vorhergehenden Ansprüche, **dadurch gekennzeichnet, dass** es einen Verriegelungsmechanismus für ein Einsteckelement (B) während des Einsteckens und im in das Aufnahmeelement (A) eingesteckten Zustand umfasst, wobei dieser Mechanismus Verriegelungsorgane (40), die dazu dienen, mit einer Umfangsfläche (13) des Einsteckelements zusammenzuarbeiten und einen Verriegelungsring (30) aufweist, der in Bezug auf den Körper (21) und parallel zur Einsteckachse (X-X') translatorisch beweglich ist, wobei dieser Ring (30) geeignet ist, unter der Wirkung von elastischen Rückstellmitteln (32) radial die Verriegelungsorgane (40) in Richtung der Einsteckachse (X-X') längs einer Umfangsfläche (213C) des Körpers (21) zurückzudrücken, die in Bezug auf die Einsteckachse geneigt ist.

18. Kupplung (R) für die lösbare Verbindung von Leitungen (C₁, C₂), die von einem unter Druck stehenden Fluid durchströmt werden, ein Einsteckelement (B) mit glattem zylindrischen Ende und ein Aufnahmeelement (A) umfassend, die geeignet sind, ineinandergesteckt zu werden, **dadurch gekennzeichnet, dass** das Aufnahmeelement (A) nach einem beliebigen der vorhergehenden Ansprüche ausgebildet ist.
